# EUROPEAN PATENT APPLICATION

(11) **EP 3 689 793 A1**
(43) Date of publication of application: **05.08.2020**
(21) Application number: 18863277.2
(22) Date of filing: 06.07.2018
(51) Int. Cl.: B65G 1/137, B65G 47/31, B65G 47/57

(54) **PACKAGE SORTING SYSTEM, PROJECTED INSTRUCTION DEVICE, AND PACKAGE SORTING METHOD**

(30) Priority: 27.09.2017 JP 2017187199
(71) Applicant: Panasonic Intellectual Property Management Co., Ltd., Osaka-shi, Osaka 540-6207 (JP)
(72) Inventor: IDERA, Takaaki, Osaka 540-6207 (JP); MORIYAMA, Takaaki, Osaka 540-6207 (JP); OHTSUBO, Shohji, Osaka 540-6207 (JP)
(74) Representative: Eisenführ Speiser
(86) International application number: PCT/JP2018/025735
(87) International publication number: WO 2019/064802

(57) **Abstract**

There is provided a parcel sorting system including: a transport conveyor; a sensor that obtains a distance image of a parcel passing through a sensing region including a part of the transport conveyor; and a projection instruction device that generates a projection image to be projected on the parcel based on the distance image, in which the transport conveyor includes a parcel separation unit that separates adjacent parcels, inside the sensing region.

## Description

### TECHNICAL FIELD

The present disclosure is related to a parcel sorting system and a parcel sorting method useful to sort parcels.

### BACKGROUND ART

As recent economic activity rises, the amount of parcel circulation tends to increase. In a circulation process of parcels, sorting work for sorting the parcel by destination is a time-consuming process and relies on manual work from before, but a technology of automating at least a part of the sorting work is proposed.

PTL 1 discloses a system in which a moving parcel is tracked, an image to be displayed is determined based on information related to the parcel read from the parcel and information of a position of the parcel, and the image is projected from a projector to display the image on the parcel.

### Citation List

### Patent Literature

PTL 1: U.S. Patent No. 7090134

### SUMMARY OF THE INVENTION

Meanwhile, in recent years, the amount of parcel circulation has been increased more and more and types of parcels have also become various, so that a technology of effectively and precisely sorting the parcel is required.

The present disclosure is related to the technology of effectively and precisely sorting the parcel.

According to the present disclosure, there is provided a parcel sorting system including: a transport conveyor; a sensor that obtains a distance image of a parcel passing through a sensing region including a part of the transport conveyor; and a projection instruction device that generates a projection image to be projected on the parcel based on the distance image, in which the transport conveyor includes a parcel separation unit that separates adjacent parcels, inside the sensing region.

According to the present disclosure, there is provided a parcel sorting method including: obtaining a distance image of a parcel passing through a sensing region including a part of a transport conveyor; and generating a projection image to be projected on the parcel based on the distance image, in which the transport conveyor includes a parcel separation unit that separates adjacent parcels, inside the sensing region.

According to the present disclosure, it is possible to more effectively and precisely sort parcels and to further deal with an increase in the amount of parcel circulation. In particular, since at least two adjacent parcels are separated on a transport conveyor when a distance image of the parcel is obtained, it is possible to more effectively and precisely sort the parcels.

### BRIEF DESCRIPTION OF DRAWINGS

FIG. 1 is a block diagram illustrating a configuration of a parcel sorting system according to an embodiment.
FIG. 2 is a block diagram illustrating a configuration of a projection instruction device according to the embodiment.
FIG. 3A is a conceptual diagram illustrating a status in which the parcel sorting system is installed in a distribution center and is in operation.
FIG. 3B is a diagram illustrating a state in which a projection image including a number is projected on an upper surface of a parcel.
FIG. 4 is a diagram illustrating an example of a projection image generated by the projection instruction device according to the embodiment.
FIG. 5 is a flowchart illustrating an outline procedure of an operation mainly performed by the projection instruction device.
FIG. 6 is a diagram illustrating another embodiment of a transport conveyor including an upwardly inclined-portion and a downward inclined-portion in a transport direction.
FIG. 7 is a diagram illustrating still another embodiment of a transport conveyer including a first transport conveyor having a low transport speed and a second transport conveyor having a high transport speed continuously arranged in the transport direction.
FIG. 8 is a diagram illustrating still another embodiment of a transport conveyor including a slide inclined downward at a tip in the transport direction.

### DESCRIPTION OF EMBODIMENTS

Hereinafter, embodiments (hereinafter, referred to as "present embodiment") which specifically disclose a projection instruction device, a parcel sorting system, and a projection instruction method according to the present disclosure will be described in detail with reference to appropriate drawings. Meanwhile, in some cases, an unnecessarily detailed explanation may be omitted. For example, in some cases, a detailed explanation of already well-known items and a repetition explanation of substantially the same configuration may be omitted. This is to avoid unnecessary repetition of the following description and to facilitate understanding by those skilled in the art. The accompanying drawings and the following description are provided to enable those skilled in the art to fully understand the present disclosure and are not intended to limit a scope of the claims.

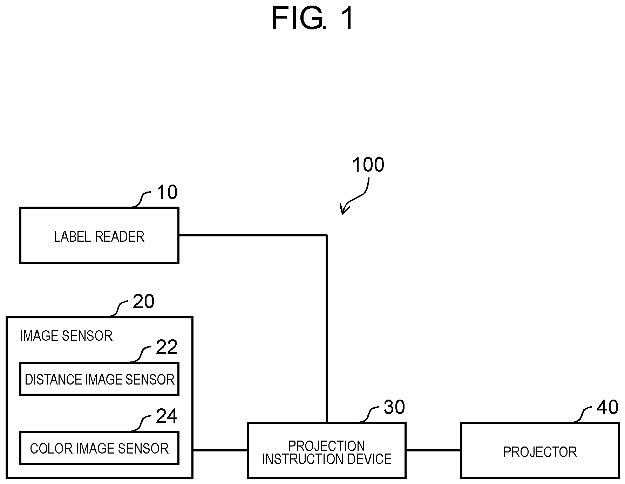

Hereinafter, the embodiments of the disclosure will be described with reference to FIGs. 1 to 8.

### [Configuration]

FIG. 1 is a block diagram illustrating a configuration of the parcel sorting system according to the embodiment. Parcel sorting system 100 illustrated in FIG. 1 is installed in, for example, a distribution center. Parcel sorting system 100 includes label reader 10, image sensor 20, projection instruction device 30, and projector 40. Parcel sorting system 100 is a system which supports work of a worker who sorts parcels transported by a transport conveyor. Parcel sorting system 100 is installed at the distribution center owned by, for example, a retailer, a wholesaler, an internet distributor, or the like. A parcel to be sorted generally has an approximately rectangular parallelepiped shape, but the outward shape of the parcel is not particularly limited, and a type of the parcel is also not particularly limited. The configuration of the parcel sorting system is not limited to the configuration illustrated in FIG. 1. For example, one label reader 10 may be connected with a plurality of image sensors 20, a plurality of projection instruction devices 30, and a plurality of projectors 40. The number of each component can be appropriately modified according to the purpose.

Label reader 10 as a reading device is a device which includes various components such as a lens (not illustrated), an image sensor, and the like. By using label reader 10, it is possible to read label recording information including various types of information related to the parcel from a label attached to the parcel transported by the transport conveyor. By using the read label recording information, it becomes possible to specify the parcel. By the read information, parcel identification information is defined.

Image sensor 20 is an imaging device which includes various components such as a lens (not illustrated), an image sensor, and the like. Image sensor 20 is generally configured by an imaging camera. The imaging camera is a three-dimensional camera, a plurality of two-dimensional cameras, or the like. Image sensor 20 includes distance image sensor 22 and color image sensor 24.

Distance image sensor 22 images the parcel transported by the transport conveyor and generates a distance image. The generated distance image is used as information indicating a position of the parcel, a distance to the parcel, a size of the parcel, and the like. "Distance image" means an image including distance information indicating a distance from an imaging position to a position (including a surface of a parcel) indicated by each of pixels (that is, "image" in the present disclosure includes a distance image). In addition, a term of "distance image" includes one which cannot be recognized as an image by human eyes, such as a table or the like listing numerical values indicating a distance. That is, "distance image" may be information indicating a relationship between coordinates and a distance in the imaged region, and a data structure is not limited thereto. In the present disclosure, distance image sensor 22 is used for specifying the position of the parcel. Therefore, distance image sensor 22 also can be replaced with another sensing device (an ultrasonic sensor, an infrared sensor, a stereo camera, and a monocular video camera).

Color image sensor 24 images a parcel generated by the distance image and generates a color image. "Color image" refers to an image in which a color of a surface of a parcel is expressed with a predetermined gradation, and the "gradation" includes not only 256 gradations of RGB but also all kinds of grayscales or the like. Color image sensor 24 in the present disclosure is used for tracking each parcel, for the parcel specified by distance image sensor 22. Color image sensor 24 also can be replaced with another sensing device (an ultrasonic sensor, an infrared sensor, a stereo camera, and a monocular video camera).

That is, in the present disclosure, a term of "image" includes both of a distance image and a color image. In the present disclosure, information output from an image sensor as a sensing device including a distance image sensor and a color image sensor is referred to as sensing information. In the present embodiment, an example of the sensing device will be described by using image sensor 20 (including distance image sensor 22 and color image sensor 24). In addition, in the present embodiment, an example of the sensing information will be described by using a distance image output by distance image sensor 22 and a color image output by color image sensor 24.

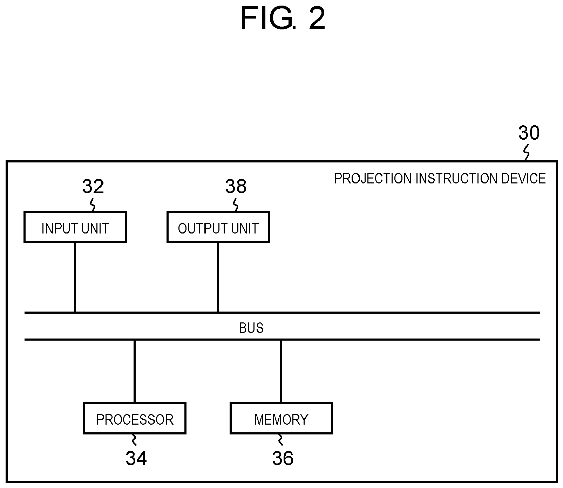

Projection instruction device 30 functions as a calculation device in parcel sorting system 100. As illustrated in FIG. 2, projection instruction device 30 includes input unit 32, processor 34, memory 36, and output unit 38 connected with one another via a bus. Input unit 32 receives parcel identification information for specifying a parcel obtained from the label recording information read by label reader 10, a distance image generated by distance image sensor 22, and a color image generated by color image sensor 24. Processor 34 is configured by a general calculation device and generates a projection image to be projected on a parcel based on the parcel identification information, the distance image, and the color image. Memory 36 as a storage device reads a control program necessary for various processes by processor 34 and performs an operation such as data backup. That is, processor 34 and memory 36 control various processes by projection instruction device 30 by cooperating with each other. Output unit 38 outputs the projection image generated by processor 34 to projector 40. In the present disclosure, "processor" does not mean only a single processor. "Processor" means an operator having a plurality of processors having an identical purpose, or a plurality of processors having different purposes in a case where they perform processes in collaboration with one another (for example, general-purpose central processing unit (CPU) and a graphic processing unit (GPU)).

Projector 40 is configured by a general projection device, and projects projection light including the projection image received from projection instruction device 30, on the parcel and displays the projection image onto the parcel.

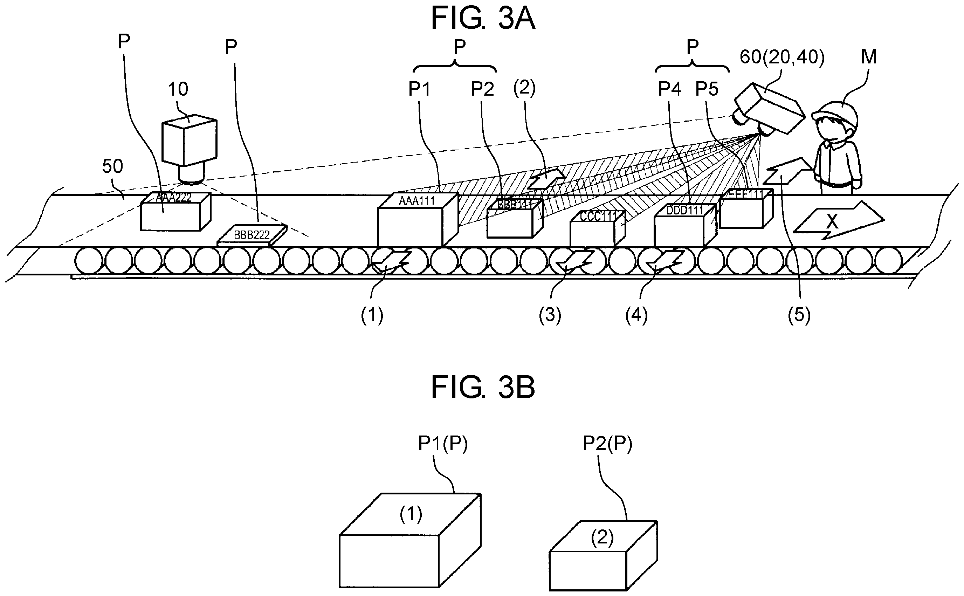

Parcel sorting system 100 can be configured to include label reader 10, image sensor 20 (distance image sensor 22 and color image sensor 24), projection instruction device 30, and projector 40 connected with one another in wired communication or in wireless communication. In addition, parcel sorting system 100 also can be configured to include two or more devices of any of label reader 10, image sensor 20, projection instruction device 30, and projector 40 as an integral device. For example, image sensor 20 and projector 40 can be combined to construct an integral imaging projection device (see FIG. 3A).

### [Outline of System]

FIG. 3A is a conceptual diagram illustrating a status in which parcel sorting system 100 is installed in the distribution center and is in operation. In the related art, each of workers M visually checks the label attached to each parcel P transported by transport conveyor 50 in the arrow X-direction. When the parcel to be delivered by the worker himself arrives, worker M needs to pick up the parcel and places the parcel once in the vicinity such as the worker's own feet, a basket, a truck bed. Meanwhile, in a case of visually sorting by the worker, there is a limit in work efficiency of the worker, so that it is necessary to limit a transport speed to a predetermined value or less. As a result, a limit value of the number of parcels which the worker can sort in a unit time, was few. In addition, due to an erroneous recognition when the worker visually checks the label, there is a possibility that an error may occur at the time of sorting. In recent years, the amount of parcel circulation has increased, and these problems receive more attention.

In the present embodiment, as illustrated in FIG. 3A, label reader 10 disposed above transport conveyor 50 reads the label attached to each parcel P transported by transport conveyor 50. In the label, the label recording information including various information related to the parcel is described. The label recording information includes information similar to a parcel identification number individually assigned to the parcel, a name, an address, and a telephone number of a sender, a name, an address, and a telephone number of a receiver, a parcel type, and the like. The label may be read by the worker in charge by manually placing a barcode reader as label reader 10 to a barcode in the label.

Further, image sensor 20 images the image (the distance image and the color image) of parcel P transported by transport conveyor 50 and obtains information such as a position of parcel P, a distance to parcel P, a size (lengths of three sides when parcel P is rectangular parallelepiped) of parcel P, a color of parcel P, a pattern of parcel P, and the like. Further, positions of label reader 10 and image sensor 20, a type of the sensing device, and an order of processes are not particularly limited to the illustrated embodiments. As described above, in the present example, image sensor 20 and projector 40 are configured as an integrated imaging projection device 60 and are disposed above transport conveyor 50.

Projection instruction device 30 (not illustrated in FIGs. 3A and 3B) is configured by a computer disposed in, for example, the vicinity of transport conveyor 50 or another room and generates the projection image to be displayed on parcel P (for example, upper surface when parcel P is rectangular parallelepiped) based on the information, obtained by label reader 10, specifying the parcel and the distance image and the color image generated by image sensor 20. Projection instruction device 30 transmits a projection instruction to project the projection image on parcel P, to projector 40.

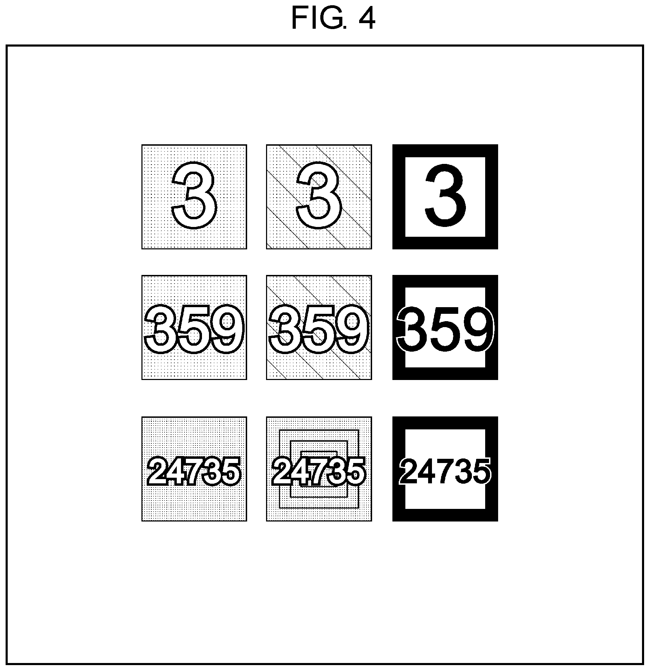

Projector 40 which receives the projection instruction, as an image projection device, projects projection light including the projection image generated by projection instruction device 30 on parcel P and displays the projection image on parcel P. Here, the projection image displayed on parcel P is, for example, an image of an encircled number having a color indicating a sorting location corresponding to a delivery address of parcel P (see FIG. 3B). Here, the encircled number corresponds to, for example, a number of a truck carrying sorted parcel P (a number of the truck itself, a parking lot number, or the like), a number of a shelf or a box to be carried into the truck, or the like. Further, instead of directly corresponding to the number such as the shelf or the box, the encircled number may correspond to a number of a shooter which moves the picked-up parcel to another location or a truck. Since a parking position of the truck or the like frequently changes according to a traffic condition or the like, it may be difficult to correspond to the sorting destination viewed from the periphery of transport conveyor 50 at any time. Therefore, the shooter is sandwiched between transport conveyor 50 and the transport truck, and a number of the shooter is projected on the periphery of transport conveyor 50, so that even if a configuration on the periphery of the transport conveyor 50 is not changed as needed, it is possible to deal with the change of the sorting destination by disposing an opening of the shooter. Certainly, according to a status, various types of projection images are displayed. Another example of displaying the number may be a zip code corresponding to the delivery address, a number of a worker who picks up parcel P, or the like. In addition, as an example of displaying information other than the number, an arrow indicating the sorting direction (such as right or left in a transport direction of transport conveyor 50) or characters (such as "left" and "right") may be used. Further, a display form is not limited to the encircled number, and various types such as numbers surrounded by squares ("3", "359", and "24735") as illustrated in FIG. 4 are conceivable. Furthermore, the projection image is not limited to numbers or characters enclosed with a frame, but may be white numbers or characters with a solid background. In addition, the shape of the number or character to be displayed such as a circle, a triangle, a square, or the like may be switched according to information to be displayed. Further, a picture capable of being individually associated with each information to be displayed may be displayed. The projection image is not limited to a still image, and may be an animation. As an example of the animation, the example described above may be blinked, enlarged or reduced, and a color may be changed. An animation reflecting the sorting direction may be projected. An example of the animations reflecting the sorting direction may include various patterns, for example, a moving light ray or light spot in the sorting direction, forming all or a part of the projection image in the sorting direction, changing the color, moving and displaying an arrow in the sorting direction, and the like. In a case where only a part of the projection image is a target of the animation, a part having a large influence on determination of the sorting destination by a worker, such as a number, an arrow, or the like, may be not changed, and a part not affected by the sorting destination such as a frame line may be changed. Meanwhile, in a situation in which it is more efficient to convey the sorting direction more intuitively than the meaning of the number or the like projected within the frame line, such as a case where there are few options for the sorting destination, a number, an arrow, or the like may be moved in the sorting direction within a fixed frame line. The animation may be repeatedly projected or may be projected only once. In the present disclosure, "image projection device" is not limited to a device which directly projects a light beam on the parcel. In the present disclosure, "image projection device" includes glasses which can display the image. That is, in the present disclosure, in a case of expressing as projecting projection light on the parcel, displaying the image on the parcel, projecting the image on the parcel, or the like, the expression also includes allowing the worker to recognize the image via the glasses capable of displaying the image in a pseudo manner as if the projection light is projected on the parcel. That is, in a case where the worker wears special glasses capable of displaying the image, the projection image of parcel P may be superimposed on the image of parcel P viewed via the glasses.

In FIG. 3A, worker M (omitted for other workers) in charge of picking up the parcel stands beside transport conveyor 50 and the parcel arriving each region is picked up from transport conveyor 50 as indicated by encircled number 1, encircled number 2, encircled number 3, or the like.

For example, parcel P1 has parcel identification information of "AAA111" on a label, and the parcel identification information of "AAA111" specifies that the parcel is a target to be sorted in region A. Here, when parcel P1 reaches the specific region, processor 34 transmits the generated projection image to projector 40 as illustrated in FIG. 3B. Projector 40 projects the projection image on parcel P1. The worker in the region can easily pay attention to parcel P1, to be picked up by the worker, which reaches the specific region of the worker, accordingly, the parcel can be sorted more efficiently and precisely.

In the present embodiment, as illustrated in FIG. 3A, whether or not one projector 40 projects the image on a plurality of specific regions maybe switched and whether or not a plurality of projectors 40 project the image on each of the specific regions may be switched.

Hereinafter, in parcel sorting system 100 according to the embodiment, an outline of an operation of sorting the parcel performed by projection instruction device 30 will be described.

### [Outline of Operation]

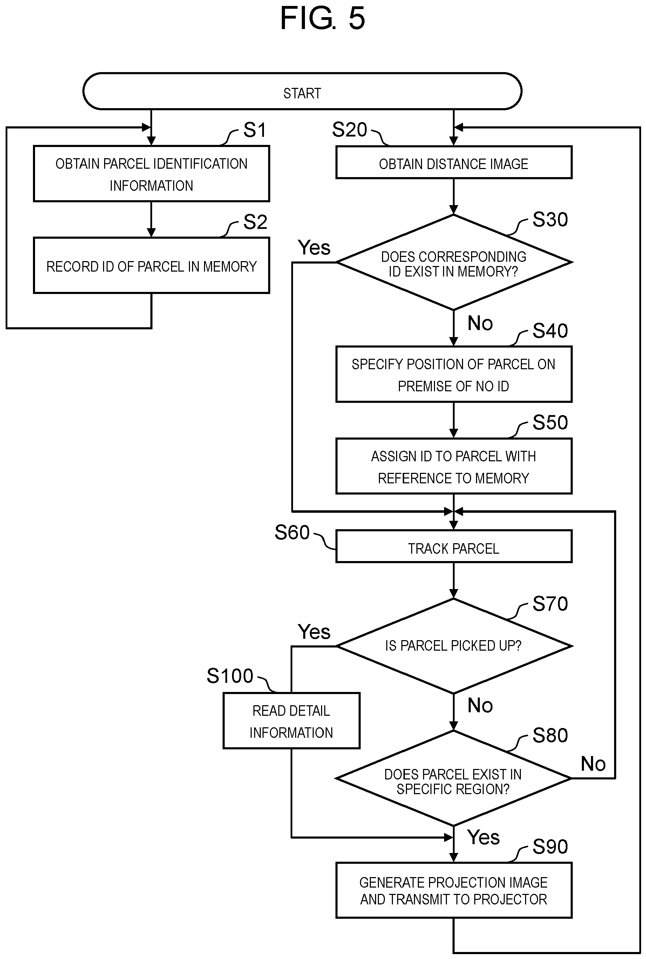

FIG. 5 is a flowchart illustrating an outline procedure of an operation of mainly performed by projection instruction device 30 of the present embodiment, particularly processor 34 of projection instruction device 30. First, after label reader 10 reads the label recording information of the label of the parcel, input unit 32 of projection instruction device 30 obtains the parcel identification information corresponding to the label recording information from label reader 10 (step S1). The parcel identification information is information including at least one piece of information similar to the parcel identification number individually assigned to the parcel, the name, the address, and the telephone number of the sender, the name, the address, and the telephone number of the receiver, the parcel type, and the like. For the parcel identification information, processor 34 assigns an ID as a parcel identification number specifying the parcel and records the ID and time information corresponding to a time at which the ID is assigned, in memory 36 (step S2). The ID recorded in memory 36 may be the parcel identification number originally recorded in the parcel identification information or may be assigned by projection instruction device 30 generating a new ID.

On the other hand, in parallel with step S1 and step S2, after distance image sensor 22 of image sensor 20 images the distance image of the parcel, input unit 32 of projection instruction device 30 obtains the distance image as the sensing information from distance image sensor 22 (step S20). Processor 34 determines whether or not the ID corresponding to the parcel existing in the distance image exists in memory 36.

An example of a method of determining whether or not the ID corresponding to the parcel existing in the distance image exists in memory 36 is as follows. That is, processor 34 calculates a time required for the parcel to move between label reader 10 and distance image sensor 22 by a distance (assumed to be known) between label reader 10 and distance image sensor 22 and a speed of transport conveyor 50. By subtracting the time from a time when the distance image is obtained, a time when the ID is assigned to the parcel existing in the distance image by label reader 10 (or processor 34) can be estimated. It can be estimated that the ID assigned close to the estimated time is the ID corresponding to the parcel existing in the distance image. In addition, as another example, a method of installing another distance image sensor in the vicinity of label reader 10 may be possible. That is, by tracking the parcel, to which the ID is assigned, by using another distance image sensor installed in the vicinity of label reader 10 since label reader 10 assigns the ID (or processor 34), a distance between the parcel (or the ID) and label reader 10 is measured for a time unit. Processor 34 can estimate the ID of the parcel in the distance image obtained in predetermined step S20 by the measured distance between the parcel (or the ID) and label reader 10, a distance of the parcel in the distance image obtained in step S20, and a distance (assumed to be known) between two distance image sensors.

In this manner, processor 34 determines whether or not the ID corresponding to the parcel included in the distance image exists in memory 36 (step S30). That is, as described in step S2, in memory 36, the parcel identification information, the ID, and the time information corresponding to a time when the ID is assigned are recorded in advance. On the other hand, as described above, for example, processor 34 subtracts the time required for the parcel to move between label reader 10 and distance image sensor 22 from the time when the distance image is obtained, a time when the ID is assigned to the parcel existing in the distance image by label reader 10 (or processor 34) can be estimated. Processor 34 compares the time information recorded in memory 36 in advance and the estimated time. In a case where the time information is close to the estimated time (for example, a case where a time difference is equal to or smaller than a predetermined threshold time), processor 34 can determine that the ID corresponding to the parcel included in the distance image exists in memory 36. In a case where it is determined that the ID corresponding to the parcel exists in memory 36 (Yes in step S30), the process moves to step S60 and subsequent steps.

In a case where it is determined that the ID corresponding to the parcel does not exist in memory 36 (No in step S30), on the premise that the ID is not assigned to the parcel, processor 34 specifies the position of the parcel again (step S40) and assigns the ID to the parcel (step S50).

In parallel with the above steps, color image sensor 24 generates a color image for each parcel of which a distance image is obtained. Processor 34 tracks the parcel, to which the ID is attached, transported and moved by transport conveyor 50 based on the color image from color image sensor 24 obtained by input unit 32 (step S60). Based on the color image likewise, processor 34 determines whether or not the worker picks up the tracked parcel (step S70). In a case where it is determined that the parcel is not picked up by the worker (No in step S70), processor 34 determines whether or not the parcel exists in a specific region (a predetermined sorting area in which the parcel is to be picked up) to be described below. In a case where it is determined that the parcel exists (reaches) in the specific region (Yes in step S80), processor 34 generates the projection image and transmits the projection image to projector 40 (step S90). In a case where it is not determined that the parcel exists (reaches) in the specific region (No in step S80), the process returns to step S60 and processor 34 continues to track the parcel.

In addition, in step S70, in a case where it is determined that the parcel is picked up by the worker (Yes in step S70), processor 34 reads detail information of the parcel from memory 36 (step S100), generates the projection image including the detail information, and outputs the projection image generated by output unit 38, to projector 40 (step S90). Projector 40 which obtains the projection image from projection instruction device 30, projects the projection image on the corresponding parcel.

The above is the outline of the operation procedure performed by processor 34 and the like of projection instruction device 30. Certainly, the operation procedure is not limited to that described above. For example, the determination in step S70 can be omitted. In addition, for the determination in step S70, it is possible to use contact determination between a hand of the worker and the parcel, a color image, a distance image, or the like. Next, a specific case of the present disclosure will be described.

### [Improvement of Transport Conveyor]

Generally, parcel sorting system 100 illustrated in FIG. 3A, a plurality of parcels are sequentially transported by transport conveyor 50. In a case where the parcels are in a state of being separated from each other, it is expected that erroneous recognition and tracking of the parcels are small.

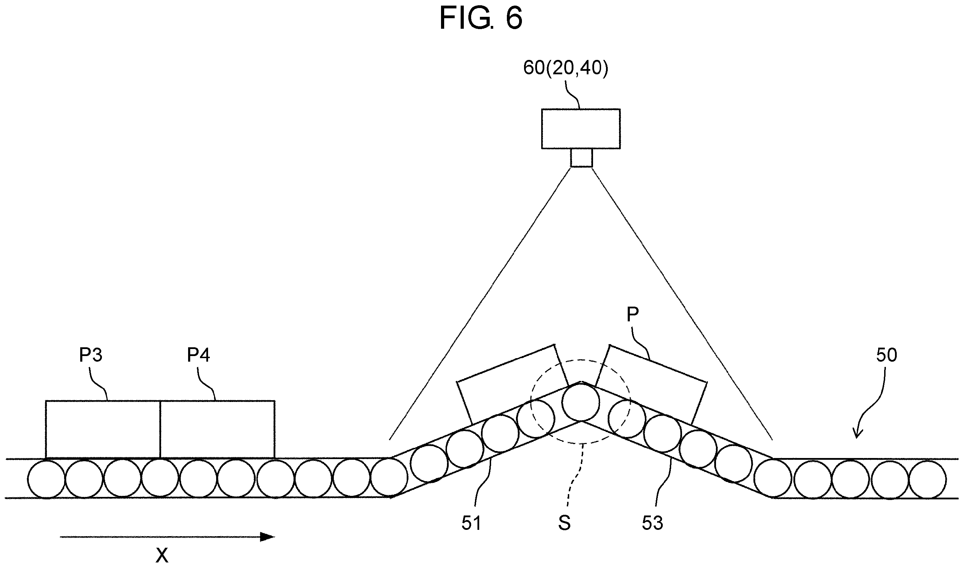

Meanwhile, as illustrated in FIG. 6, a situation in which plurality of parcels P3 and P4 are transported adjacent to each other may occur. In this case, a situation in which image sensor 20 erroneously recognizes parcels P3 and P4 as one parcel and individual identification becomes difficult may occur. When this situation occurs, parcels P3 and P4 are not correctly specified and are not tracked. That is, if parcels P3 and P4 are adjacent to each other at a stage of assigning IDs to the parcels, it is erroneously recognized that only one of the parcels exists, and only one ID is assigned. In addition, when parcels P3 and P4 are adjacent to each other during the tracking of the parcel, it is recognized that only one of the parcels is transported, and tracking is performed. In particular, in a case where colors of parcels P3 and P4 are similar, it is difficult to separate the parcels by using a color image sensor, and such a situation is likely to occur. The same problem is not limited to the case where parcels P3 and P4 are completely adjacent to each other, and may occur in a case where a distance between parcels P3 and P4 is close and cannot be separated by accuracy of a distance image sensor. Hereinafter, the state in which parcels P3 and P4 are adjacent to each other or the state in which a distance between parcels P3 and P4 is close and cannot be separated by accuracy of the distance image sensor is expressed as "adjacent".

Therefore, the present disclosure provides a projection instruction device which improves a configuration of a transport conveyor so that a plurality of adjacent parcels can be separated during transportation and a projection image can be projected on each parcel.

Transport conveyor 50 in FIG. 6 includes upward inclined-portion 51 in which an upward inclination is formed along a transport direction X, and downward inclined-portion 53 in which a downward inclination is formed along the transport direction X. A transport speed of parcel P decreases at upward inclined-portion 51, while a transport speed of parcel P increases at downward inclined-portion 53. Two parcels adjacent each other before the inclined-portion 51 are separated from each other at a boundary between upward inclined-portion 51 and downward inclined-portion 53 and move with a predetermined distance. That is, boundary S in FIG. 6 functions as parcel separation unit S which separates at least two adjacent parcels.

A region to be imaged by image sensor 20, that is, a sensing region, includes a part, in which an inclination angle changes, of transport conveyor 50. Image sensor (here, a sensor which obtains a distance image) 20 can individually identify the two parcels and obtain a distance image, and processor 34 of projection instruction device 30 which receives this can individually track the two parcels after being separated from an adjacent state in parcel separation unit S (boundary S) included inside the sensing region. Further, processor 34 can generate a projection image for each parcel, and projector 40 can project the projection image for each parcel.

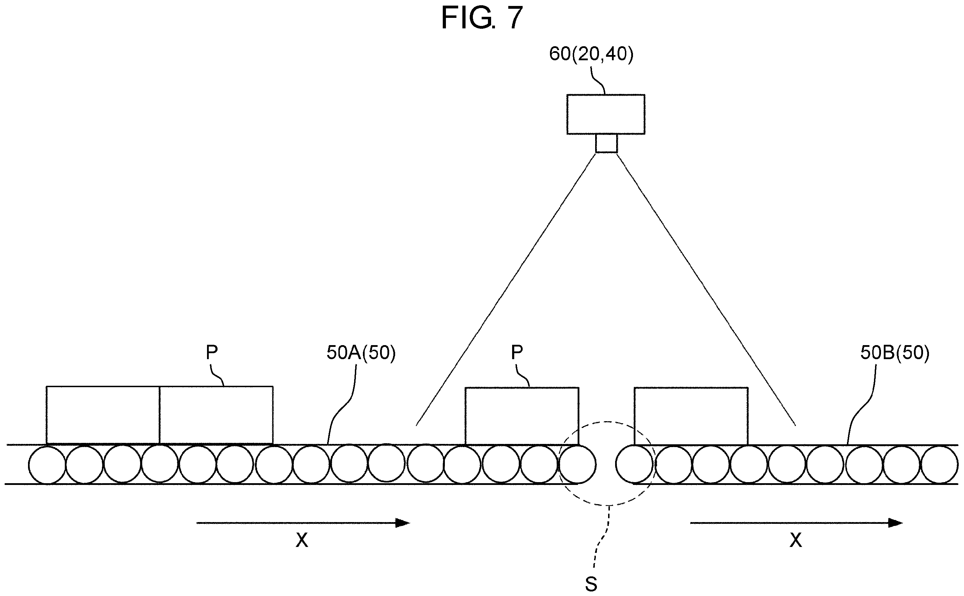

Transport conveyor 50 in FIG. 7 includes first transport conveyor 50A having a low transport speed and second transport conveyor 50A having a high transport speed, continuously arranged along the transport direction X. In parcel separation unit S at a boundary between the two transport conveyors, two adjacent parcels are separated from each other and move with a predetermined distance. Therefore, image sensor 20 including a region for imaging a portion at which the transport speed changes can individually identify the two parcels and obtain a distance image, and processor 34 of projection instruction device 30 which receives this can individually track the two parcels after being separated from an adjacent state in parcel separation unit S (boundary S) in the transport conveyor configured by the boundary as described above. Further, processor 34 can generate a projection image for each parcel, and projector 40 can project the projection image for each parcel.

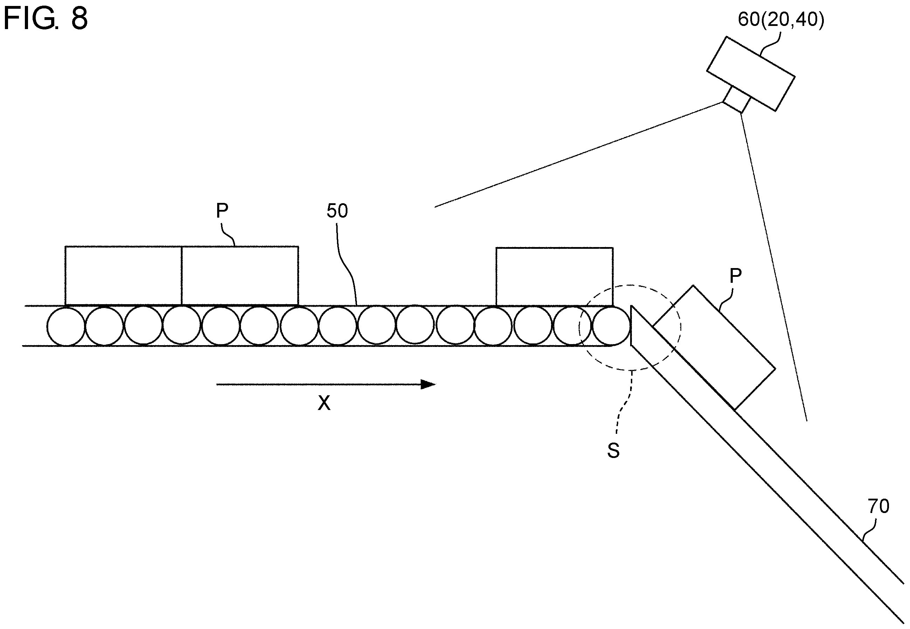

Transport conveyor 50 in FIG. 8 includes slide 70 inclined downward at a tip in the transport direction. Since at the tip of transport conveyor 50, the leading parcel drops down while being accelerated by slide 70 at parcel separation unit S at a boundary between transport conveyor 50 and slide 70, two adjacent parcels are separated from each other and move with a predetermined distance. Therefore, image sensor 20 including a region (a sensing region) for imaging the boundary between transport conveyor 50 and slide 70 can individually identify the two parcels and obtain a distance image, and processor 34 of projection instruction device 30 which receives this can individually track the two parcels after being separated from an adjacent state in parcel separation unit S (boundary S) in the transport conveyor configured by the boundary as described above. Further, processor 34 can generate a projection image for each parcel, and projector 40 can project the projection image for each parcel.

Since the transport conveyor of the present disclosure has the configuration described above and image sensor 20 can individually identify two separated parcels, finally, projector 40 can project a projection image for each parcel, and it is possible to increase accuracy and efficiency of the operation. Further, when the worker places the parcel on the transport conveyor, the worker can work without worrying about a method of placing the parcel.

The specific embodiment of parcel separation unit S is not limited to those illustrated in FIGs. 6 to 8, and may be any as long as at least two parcels in an adjacent state are separated with accuracy of the distance image sensor.

Although the embodiment of a projection instruction device, a parcel sorting system, and a projection instruction method according to the present disclosure is described with reference to the drawings, the present disclosure is not limited to such an example. Those skilled in the art can conceive various modification examples, change examples, substitution examples, addition examples, deletion examples, and equivalent examples within the scope described in the claims and these rightly belong to the technical scope of the present disclosure.

The embodiment described above is described on the assumption that the speed changes due to the change in the inclination angle of transport conveyor 50 in FIG. 6. Meanwhile, in a case where a friction coefficient between the parcel and transport conveyor 50 is high, the transport speed of the parcel may not change even if the inclination angle changes. In particular, in a configuration in which transport conveyor 50 has a change in the inclination angle, it is desirable to install image sensor 20 near boundary S at which the parcels are reliably separated by a difference in the inclination angle. In this case, there is a possibility that the parcels may be adjacent again after boundary S. Meanwhile, if a fact that a plurality of parcels has been existed at least at boundary S can be recognized, it becomes easy to detect that the plurality of parcels adjacent one large parcel recognized downstream are erroneously recognized.

In the embodiment described above, transport conveyor 50 in FIG. 6 includes upward inclined-portion 51 and downward inclined-portion 52, but the embodiment is not limited thereto. A structure in which upward inclined-portion 51 is connected to a portion having no inclination, or a structure in which the portion having no inclination is connected to downward inclined-portion 52 may be used. That is, as long as an angle is determined so that a parcel located downstream is separated from a parcel located upstream in the transport direction seen from image sensor 20, the angle of inclination does not matter.

With reference to FIGs. 6 to 8, the embodiment describes the example in which a transport speed of the parcel located downstream is larger than a transport speed of the parcel located upstream in the transport direction. Meanwhile, the configuration illustrated in the drawings is merely an example, and as long as the downstream transport speed is larger than the upstream transport speed, another configuration may be used.

In the embodiment described above, boundary S is disposed inside the imaging region of image sensor 20, but the embodiment is not limited thereto. In a case where separation of a parcel at boundary S is caused by a change in speed, a state where the parcel is separated after passing through boundary S continues. Therefore, even when image sensor 20 is disposed downstream of boundary S, there is a high possibility that the parcel having the separated state can be recognized. Such a structure is particularly useful in a case where it is difficult to dispose image sensor 20 near boundary S due to the environment in which transport conveyor 50 is arranged.

In the embodiment described above, the location at which the inclination angle or the transport speed changes and the location at which image sensor 20 is disposed coincide with each other, but the embodiment is not limited thereto. The inclination angle or the transport speed may change at a predetermined position in transport conveyor 50. Even in this case, the possibility that the parcels are transported in the separated state is increased as compared with a transport conveyor in which neither the inclination angle nor the transport speed changes.

In the embodiment described above, a plurality of locations at which the inclination angle or the transport speed of transport conveyor 50 changes may be provided. Accordingly, this increases the chances of the parcels being separated, so that the parcels can be more reliably separated.

In the embodiment described above, an image obtained by image sensor 20 at the location at which the inclination angle or the transport speed of transport conveyor 50 changes is a distance image, but the embodiment is not limited thereto. Instead of the distance image, or together with the distance image, image sensor 20 may obtain a color image. In the embodiment described above, the tracking of the parcel based on the color image is also performed, so that a tracking error is likely to occur in a case where the parcels having colors likewise are transported adjacently. Therefore, by obtaining a color image at boundary S at which the parcels are separated or at the downstream thereof, it is possible to reduce the tracking error.

### INDUSTRIAL APPLICABILITY

The present disclosure is useful to provide a projection instruction device, a parcel sorting system, and a projection instruction method capable of separating parcels in an adjacent state and individually tracking the parcels.

### REFERENCE MARKS IN THE DRAWINGS

- 10: LABEL READER
- 20: IMAGE SENSOR
- 22: DISTANCE IMAGE SENSOR
- 24: COLOR IMAGE SENSOR
- 30: PROJECTION INSTRUCTION DEVICE
- 32: INPUT UNIT
- 34: PROCESSOR
- 36: MEMORY
- 38: OUTPUT UNIT
- 40: PROJECTOR
- 50: TRANSPORT CONVEYOR
- 60: IMAGING PROJECTION DEVICE
- 100: PARCEL SORTING SYSTEM
- P: PARCEL
- S: PARCEL SEPARATION UNIT (BOUNDARY)

## Claims

1. A parcel sorting system comprising:
a transport conveyor;
a sensor that obtains a distance image of a parcel passing through a sensing region including a part of the transport conveyor; and
a projection instruction device that generates a projection image to be projected on the parcel based on the distance image,
wherein the transport conveyor includes a parcel separation unit that separates adjacent parcels, inside the sensing region.

2. The parcel sorting system of Claim 1,
wherein the parcel separation unit changes at least one of an inclination angle and a transport speed of the parcel transported by the transport conveyor to separate the adjacent parcels.

3. The parcel sorting system of Claim 1 or 2,
wherein the transport conveyor includes an upward inclined-portion forming an upward inclination in a transport direction and a downward inclined-portion forming a downward inclination in the transport direction, and
the parcel separation unit is formed by a boundary between the upward inclined-portion and the downward inclined-portion.

4. The parcel sorting system of Claim 1 or 2,
wherein the transport conveyor includes a first transport conveyor and a second transport conveyor having a transport speed higher than a transport speed of the first transport conveyor,
the parcel separation unit is formed by a boundary between the first transport conveyor and the second transport conveyor, and
the projection instruction device individually tracks two parcels separated by the parcel separation unit.

5. The parcel sorting system of Claim 1 or 2,
wherein the transport conveyor includes a slide at a tip in a transport direction, and
the parcel separation unit is formed by a boundary between the transport conveyor and the slide.

6. The parcel sorting system of any one of Claims 1 or 5,
wherein the projection instruction device generates a projection image to be projected on each of adjacent parcels.

7. The parcel sorting system of any one of Claims 1 or 6, further comprising:
a label reader that reads parcel identification information from a label attached to a parcel; and
an image projection device that projects the projection image on the parcel.

8. A projection instruction device in the parcel sorting system according to any one of claims 1 to 7.

9. A parcel sorting method comprising:
obtaining a distance image of a parcel passing through a sensing region including a part of a transport conveyor; and
generating a projection image to be projected on the parcel based on the distance image,
wherein the transport conveyor includes a parcel separation unit that separates adjacent parcels, inside the sensing region.
